# DEMANDE DE BREVET EUROPEEN

(11) **EP 1 422 017 A2**
(43) Date de publication de la demande: **26.05.2004**
(21) Numéro de dépôt: 03292322.9
(22) Date de dépôt: 22.09.2003
(51) Int. Cl.: B23K 31/02

(54) **Structure mécano-soudée avec fente de relaxation et navire de transport de gaz liquéfié équipé d'une telle structure**

(30) Priorité: 22.11.2002 FR 0214674
(71) Demandeur: Gaztransport & Technigaz, 78470 Saint-Rémy-lès-Chevreuse (FR)
(72) Inventeur: Michalski, Pierre, 78460 Chevreuse (FR); Chapot, Karim, 78660 Prunay en Yvelines (FR)
(74) Mandataire: Thinat, Michel

(57) **Abrégé**

L'invention concerne une structure mécano-soudée comprenant un premier élément de structure métallique (10) plat et mince s'étendant dans un plan et délimitée d'un côté par un bord droit (15), et un second élément de structure métallique (20) soudé sur le bord droit (15) du premier élément de structure (10), ou sur un élément intermédiaire (25) solidaire de ce bord droit (15) et interposé entre les premier et second éléments de structure (10, 20), le second élément de structure (20) exerçant en au moins un point (151) du bord droit (15) un effort se décomposant en au moins une composante s'étendant dans ledit plan perpendiculairement au bord droit (15).

Selon l'invention, le premier élément de structure (10) comprend une fente de relaxation (12) s'étendant parallèlement au bord droit (15), et située en regard du point sur lequel s'exerce ledit effort.

## Description

L'invention concerne en général l'industrie de la construction métallique.

Plus précisément, l'invention concerne selon un premier aspect une structure mécano-soudée comprenant un premier élément de structure métallique plat et mince s'étendant dans un plan et délimité d'un côté par un bord droit, et un second élément de structure métallique soudé sur le bord droit du premier élément de structure, ou sur un élément intermédiaire solidaire de ce bord droit et interposé entre les premier et second éléments de structure, le second élément de structure exerçant en au moins un point du bord droit un effort se décomposant en au moins une composante s'étendant dans ledit plan perpendiculairement au bord droit.

Des structures de ce type sont connues de l'art antérieur et sont utilisées dans toutes sortes de constructions métalliques.

Elles sont utilisées en particulier pour la construction de navires de transport de gaz liquéfié connus sous le nom de méthanier.

Un méthanier est divisé en plusieurs cellules contenant chacune une cuve de gaz liquéfié. Chaque cuve comprend des membranes primaire et secondaire de confinement du gaz, fixées à des plats d'ancrage soudés sur les parois de la cellule. Un dispositif d'isolation thermique primaire isole la barrière primaire de la barrière secondaire et un dispositif d'isolation thermique secondaire isole la barrière secondaire des parois de la cellule. Des raidisseurs présentant la forme de nervures sont soudés sur les faces extérieures des parois.

Le raidisseur, le plat d'ancrage et la paroi de la cellule constituent une structure mécano-soudée du type décrit ci-dessus, et correspondent respectivement au premier élément de structure, au second élément de structure et à l'élément intermédiaire.

Ces navires présentent le défaut que les soudures de certains plats d'ancrage sur les parois de la cellule sont fortement sollicitées en fatigue.

En effet, ces soudures subissent un chargement permanent résultant de la sollicitation des membranes sur les plats d'ancrage. Ces membranes sont soumises à de très basses températures quand la cuve est remplie de gaz liquéfié, et se rétractent, sollicitant les plats d'ancrage vers l'intérieur de la cellule.

Par ailleurs, le navire subit des cycles d'élongations et de compressions longitudinales alternatives, causés par la houle. Les contraintes cycliques engendrées par ces élongations et compressions s'ajoutent au chargement permanent des soudures.

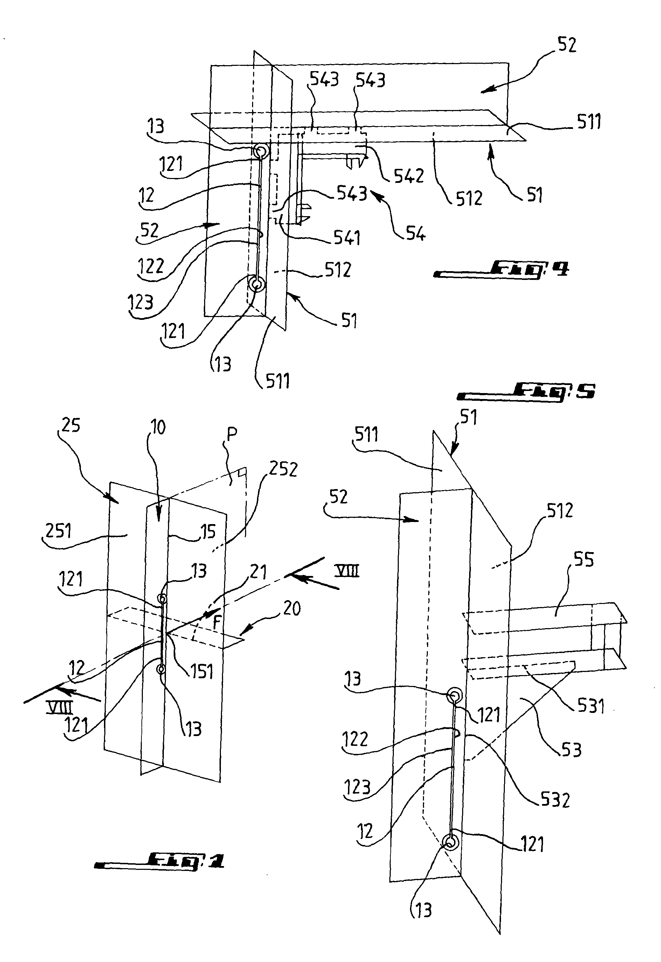

Quand les plats d'ancrage sont situés à des endroits particulièrement raides de la paroi, il peut se produire des ruptures de fatigue de certaines soudures après plusieurs années de service du navire. C'est le cas en particulier quand le plat d'ancrage est situé à proximité d'un raidisseur, et spécialement quand le plat d'ancrage et le raidisseur sont disposés en regard l'un de l'autre, de part et d'autre de la paroi, et se croisent, de la façon illustrée sur la figure 1.

Dans ce contexte, la présente invention a pour but de pallier le défaut mentionné ci-dessus.

A cette fin, la structure de l'invention, par ailleurs conforme à la définition générique qu'en donne le préambule ci-dessus, est essentiellement caractérisée en ce que le premier élément de structure comprend une fente de relaxation s'étendant parallèlement au bord droit, et située en regard du point sur lequel s'exerce ledit effort.

Dans un mode de réalisation possible de l'invention, la fente de relaxation est disposée à proximité immédiate du bord droit.

Avantageusement, la fente de relaxation présente au repos une largeur inférieure à deux centimètres.

De préférence, le premier élément de structure présente une forme allongée dans une direction parallèle au bord droit, le premier élément de structure présentant perpendiculairement à ladite direction une première dimension au niveau du point sur lequel s'exerce l'effort, la fente de relaxation présentant selon ladite direction une longueur supérieure à ladite première dimension.

Par exemple, la fente de relaxation débouche à deux extrémités opposées dans des trous circulaires percés dans le premier élément de structure, ces trous présentant un diamètre au moins trois fois supérieur à la largeur de la fente de relaxation.

Avantageusement, le premier élément de structure est renforcé autour des trous circulaires par des tôles doublantes.

L'invention, selon un second aspect, concerne un navire de transport de gaz liquéfié comprenant une coque, une cellule délimitée par des cloisons solidaires de la coque, et une cuve de stockage du gaz liquéfié disposée dans la cellule, une au moins des cloisons de la cellule étant une structure mécano-soudée du type décrit précédement, cette cloison comprenant une paroi constituant l'élément intermédiaire, au moins un raidisseur soudé sur une face extérieure de la paroi opposée à la cuve de stockage et constituant le premier élément de structure, et une pièce soudée sur une face intérieure de la paroi opposée à la face extérieure, telle qu'un gousset de raidissement ou un élément d'ancrage, cette pièce constituant le second élément de structure.

Avantageusement, le second élément de structure est un élément d'ancrage, la cuve de stockage comprenant une membrane de confinement du gaz liquéfié fixée à cet élément d'ancrage, l'effort exercé sur le raidisseur étant engendré par la sollicitation de la membrane de confinement sur l'élément d'ancrage.

De préférence, l'élément d'ancrage est un plat d'ancrage s'étendant dans un plan perpendiculaire au raidisseur.

Par exemple, la paroi s'étend dans un plan perpendiculaire à la direction normale de déplacement du navire, le raidisseur s'étendant dans un plan perpendiculaire à la paroi.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective d'un premier mode de réalisation d'une structure mécano-soudée selon l'invention,
- la figure 2A est une représentation graphique des niveaux de contrainte dans un quart inférieur de la structure de la figure 1 pour un cas de chargement typique, en l'absence de fente de relaxation, la figure 2B étant une vue de dessus agrandie des contraintes dans le second élément de structure,
- la figure 3A est une vue équivalente à la figure 2A, pour une structure munie d'une fente de relaxation, la figure 3B étant une vue de dessus agrandie des contraintes dans le second élément de structure,
- la figure 4 est une vue en perspective d'un premier exemple de structure mécano-soudée de navire de transport de gaz conforme à l'invention,
- la figure 5 est une vue en perspective d'un deuxième exemple de structure mécano-soudée de navire de transport de gaz liquéfié conforme à l'invention,
- la figure 6 est une vue en perspective d'un troisième exemple de structure mécano-soudée de navire de transport de gaz liquéfié conforme à l'invention,
- la figure 7 est une représentation schématique simplifiée d'un navire selon l'invention, et
- les figures 8A à 8C sont des vues en coupe dans le plan défini par les flèches VIII de la figure 1, représentant trois variantes de réalisation de la fente de relaxation.

La structure mécano-soudée représentée sur la figure 1 comprend un premier élément de structure métallique 10 plat et mince s'étendant dans un plan P, cet élément étant délimité d'un côté par un bord droit 15, et un second élément de structure métallique 20 soudé sur un élément intermédiaire 25 solidaire de ce bord droit 15.

L'élément intermédiaire 25 est interposé entre les premier et second éléments de structure 10 et 20, le second élément de structure 20 exerçant en au moins un point 151 du bord droit 15 un effort F se décomposant en au moins une composante s'étendant dans ledit plan P perpendiculairement au bord droit 15.

Sur la figure 1, l'élément intermédiaire 25 est une plaque métallique plane, le premier élément de structure 10 étant une nervure soudée sur une première face 251 de la plaque 25 et le second élément de structure 20 étant une autre nervure soudée sur une deuxième face 252 de la plaque opposée à la première.

Le second élément de structure 20 présente un bord de fixation 21 droit soudé sur la plaque 25.

Les premier et second éléments de structure 10 et 20 sont disposés en regard l'un de l'autre, de part et d'autre de la paroi 25, et se croisent à angle droit.

Le point 151 sur lequel s'exerce l'effort F correspond au point de croisement des premier et second éléments de structure 10 et 20.

Le plan P dans lequel s'étend le premier élément de structure 10 est sensiblement perpendiculaire à la plaque 25. De même, le second élément de structure 20 s'étend dans un plan perpendiculaire à la plaque 25.

Selon l'invention, le premier élément de structure 10 comprend une fente de relaxation 12 s'étendant parallèlement au bord droit 15, et située en regard du point 151 sur lequel s'exerce ledit effort F.

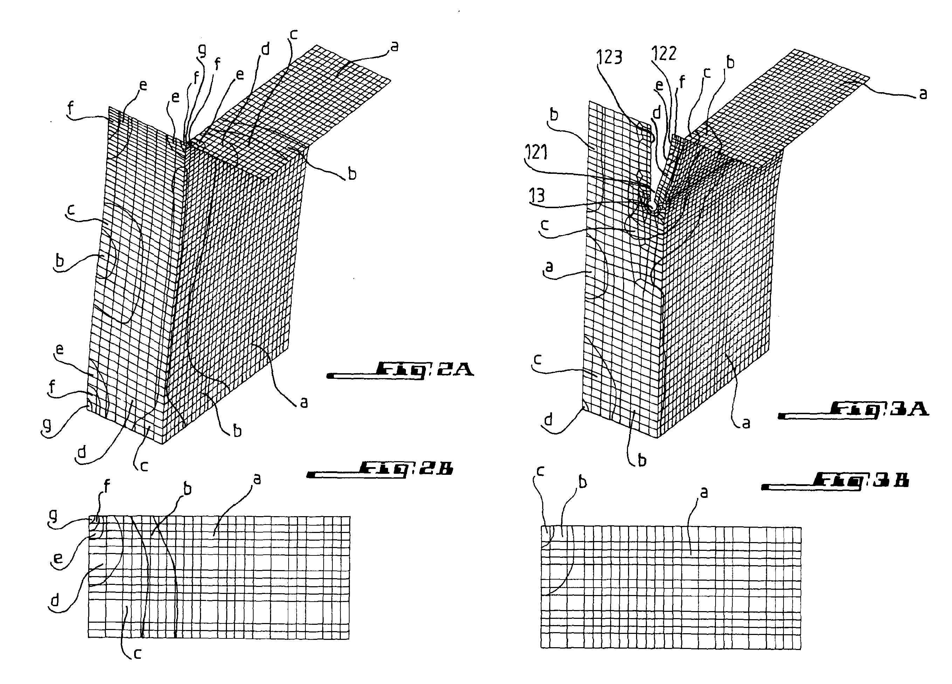

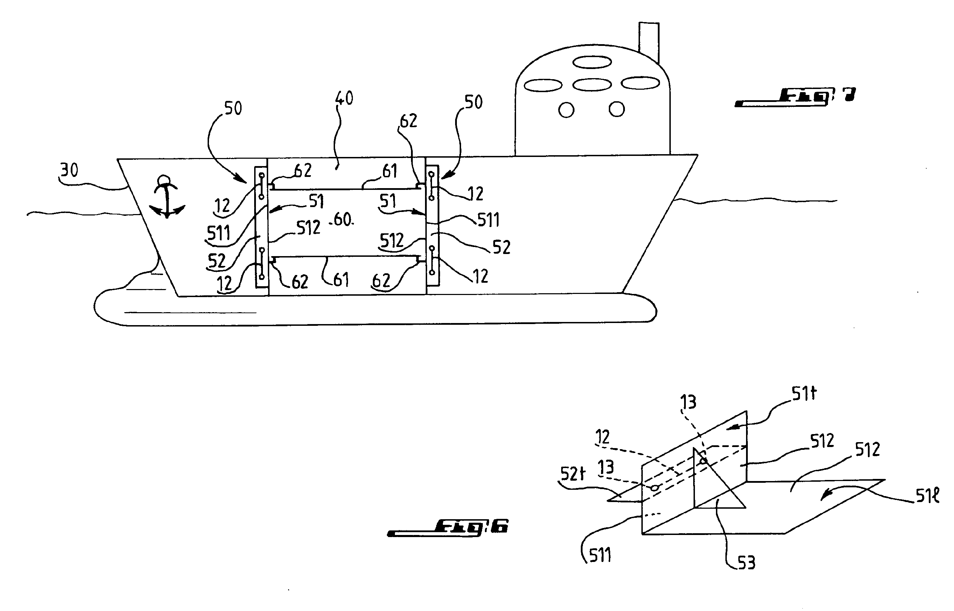

On comprend bien l'intérêt de cette fente de relaxation en comparant les figures 2A et 2B aux figures 3A et 3B.

La figure 2A représente les niveaux de contrainte dans la structure mécano-soudée pour un cas de chargement typique, en l'absence de fente de relaxation. La structure est divisée en zones par des lignes isocontraintes, et un code caractérisant le niveau de contrainte est affecté à chaque zone. Le code peut prendre les valeurs a, b, c, d, e, f, ou g, codant des niveaux de contrainte croissants dans cet ordre.

On voit sur les figures 2A et 2B que la zone située autour du point 151 de croisement entre les première et deuxième structures 10 et 20 est affectée du code g.

Les contraintes sur la soudure du second élément de structure 20 décroissent progressivement de façon sensiblement concentrique quand on s'éloigne du point 151, passant de g à a, comme on peut le voir sur la figure 2B.

Les figures 3A et 3B montrent les niveaux de contrainte dans les mêmes conditions de chargement, en présence d'une fente de relaxation 12. Ces niveaux sont codifiés de la même façon que sur les figures 2A et 2B.

Comme le montre la figure 3A, la fente de relaxation 12 s'ouvre sous l'effet de l'effort F. Cette fente est délimitée par des bords longitudinaux proximal et distal 122 et 123, parallèles au bord droit 15, respectivement relativement plus proche et relativement plus éloigné de ce bord droit 15. Le bord distal 123 reste sensiblement droit. En revanche le bord proximal 122 s'écarte du bord distal 123 en se déformant.

Comme on peut le voir sur la figure 1, la fente de relaxation 12 est disposée de façon à ce que le point de croisement 151 soit situé en regard d'un point central de la fente 12. Ce point central est situé à mi-distance de deux extrémités longitudinales opposées 121 de la fente.

Comme le montre la figure 3A, le bord proximal 122 est fortement écarté du bord distal 123 au centre de la fente de relaxation 12, en direction du bord droit 15, et n'est pratiquement pas écarté du bord distal 123 aux deux extrémités longitudinales 121 de la fente.

Les contraintes dans la zone du point de croisement 151 sont fortement réduite, cette zone étant affectée d'un niveau de contrainte codé c seulement.

De même que précédemment, les contraintes sur la soudure du second élément de structure 20 décroissent progressivement de façon sensiblement concentrique quand on s'éloigne du point 151, passant de c à a, comme on peut le voir sur la figure 3B.

La fente de relaxation 12 a pour effet de diminuer fortement les contraintes au niveau de cette soudure.

La fente de relaxation 12 est disposée de préférence à proximité immédiate du bord droit 15. Le choix précis de sa position est effectué par l'homme du métier en fonction des caractéristiques géométriques et des matériaux des différents éléments de la structure.

Ce choix dépend de deux exigences contradictoires.

Il faut d'une part que la fente soit suffisamment proche du bord droit 15 pour que le bord proximal 122 puisse se déformer facilement. Il faut d'autre part qu'il ne soit pas trop proche pour que la soudure du premier élément de structure 10 sur la plaque 25 ne soit pas endommagée au moment où la fente est découpée dans le premier élément de structure 10.

Si nécessaire, la fente peut être ménagée le long de la plaque 25, comme illustré sur les figures 8A et 8C. Elle est dans ce cas découpée dans le bord droit 15 du premier élément de structure 10, son bord distal 123 appartenant alors au premier élément de structure 10 et son bord proximal 122 appartenant à la plaque 25. Cette disposition permet une déformation maximum du bord proximal 122.

Dans ce dernier cas, la fente de relaxation 12 ne peut pas être découpée in situ, après soudage du premier élément de structure 10 sur la plaque 25. Au contraire, la fente est découpé dans le bord droit 15 en atelier, puis le premier élément de structure est monté sur la plaque 25.

Par ailleurs, la fente de relaxation 12 présente au repos, c'est-à-dire en l'absence d'effort F, une largeur inférieure à deux centimètres suivant une direction transversale.

Cette largeur est déterminée essentiellement par de l'outil utilisé pour pratiquer la fente. Elle ne doit pas être trop importante pour ne pas changer l'inertie du premier élément de structure 10.

Si la fente travaille essentiellement en traction, c'est-à-dire si l'effort F tend à écarter le bord proximal 122 du bord distal 123, la largeur de la fente est de préférence de un millimètre environ.

Si la fente travaille en traction et en compression, c'est-à-dire si l'effort F tend, suivant les cas, à écarter ou à rapprocher de bord proximal 122 et le bord distal 123, la fente présente une largeur de cinq à vingt millimètres. Une telle fente est représentée sur la figure 8A.

Comme le montre la figure 1, le premier élément de structure 10 présente, perpendiculairement au bord droit 15, une première dimension au niveau du point de croisement 151, la fente de relaxation présentant longitudinalement une longueur supérieure à la dite première dimension.

Cette caractéristique permet de conférer au bord proximal 122 une souplesse suffisante.

La fente de relaxation 12 débouche à ses deux extrémités opposées 121 dans des trous circulaires 13 percés dans le premier élément de structure 10. De préférence, ces trous 13 présentent un diamètre au moins trois fois supérieur à la largeur de la fente de relaxation 12.

Pour une fente de cinq millimètres de large, les trous 13 présentent un diamètre de trente millimètres.

Ces trous présentent des centres disposés dans l'alignement de la fente de relaxation 12.

Au cas où la fente de relaxation est disposée contre la plaque 25, les trous circulaires 13 sont décentrés dans une direction opposée au bord droit 15.

Ils sont délimités dans ce cas par un bord en arc de cercle partant du bord distal 123 et s'étendant sur 240° environ, se prolongeant par un bord rectiligne jusqu'à la plaque 25, ce bord rectiligne étant perpendiculaire à la plaque 25. Les trous 13 sont donc ouverts du côté de la plaque 25, comme le montrent les figures 8A et 8C.

Ces trous permettent de diminuer les contraintes s'exerçant sur les extrémités 121 de la fente de relaxation 12. En leur absence, ces contraintes seraient très importantes et il y aurait un risque élevé de déchirement à terme à ces extrémités.

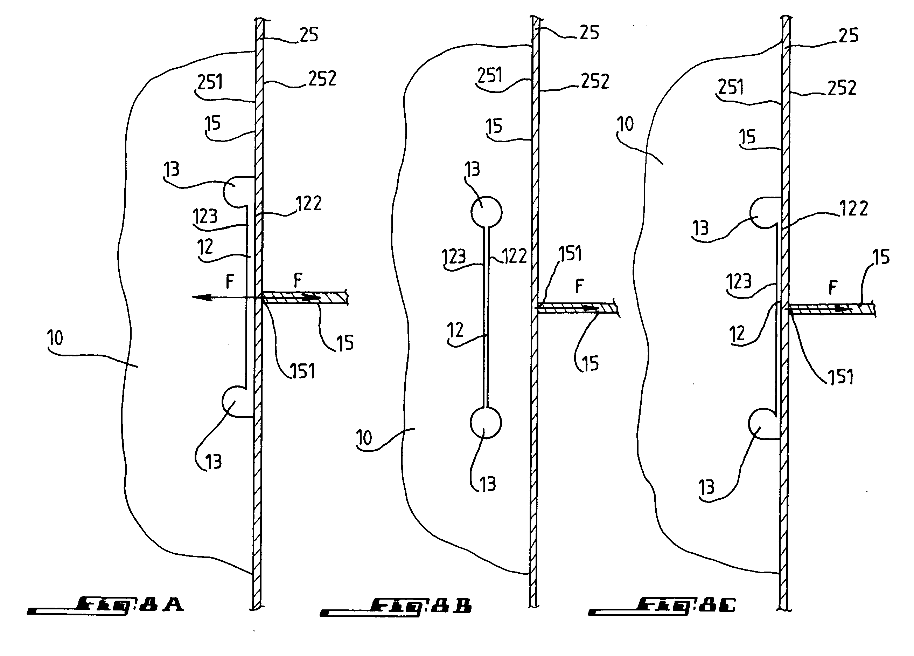

Les contraintes autour des trous 13 sont néanmoins élevées quand les bords proximal et distal 122 et 123 de la fente 12 sont écartés. De façon à accroître la résistance de cette zone, le premier élément de structure 10 est renforcé autour des trous circulaires 13 par des tôles doublantes 14 représentées sur les figures 4 et 5.

Ces tôles présentent chacune la forme d'une couronne d'acier soudée sur le premier élément de structure 10. Chaque couronne présente un diamètre d'environ soixante-dix millimètres pour un trou 13 de diamètre trente millimètre, et comprend un orifice central de même diamètre que le trou 13 et disposé dans l'alignement de celui-ci.

Ce type de structure mécano-soudé trouve naturellement son application dans un navire de transport de gaz liquéfié du type méthanier.

Un tel navire est représenté sur la figure 7 et comprend une coque 30 allongée dans une direction de déplacement normal du navire, une cellule 40 délimitée par des cloisons 50 solidaires de la coque 30, et une cuve de stockage 60 du gaz liquéfié disposée dans la cellule 40.

Deux cloisons 50 de la cellule 40 sont des structures mécano-soudées du type décrit ci-dessus.

Chacune de ces cloisons 50 comprend une paroi 51 constituant l'élément intermédiaire 25, au moins un raidisseur 52 soudé sur une face extérieure 511 de la paroi 51 opposée à la cuve de stockage 60 et constituant le premier élément de structure 10, et au moins une pièce soudée sur une face intérieure 512 de la paroi 51 opposée à la face extérieure 511, telle qu'un gousset de raidissement ou un élément d'ancrage, cette pièce constituant le second élément de structure 20.

Dans l'exemple de réalisation représenté sur la figure 7, chaque paroi 51 porte deux seconds éléments 20 constituant des éléments d'ancrage, la cuve de stockage 60 comprenant deux membranes de confinement 61 du gaz liquéfié fixées à ces éléments d'ancrage, le raidisseur 52 subissant des efforts engendrés par la sollicitation des membranes de confinement 61 sur les éléments d'ancrage.

Ces éléments d'ancrage sont des plats d'ancrage 62 s'étendant dans des plans perpendiculaire au raidisseur 52.

La paroi 51 s'étend dans un plan perpendiculaire à la direction d'avancement normal du navire, le raidisseur 52 s'étendant dans un plan perpendiculaire à la paroi 51.

On retrouve ici exactement l'agencement des éléments de la figure 1.

Le raidisseur 52 porte deux fentes de relaxation 12 disposées en regard des plats d'ancrage 62.

D'autres structures du navire peuvent présenter les caractéristiques des structures mécano-soudées décrites ci-dessus.

Un premier exemple est représenté sur la figure 4 et correspond à un angle entre une cloison transversale 50t et une cloison longitudinale 50l, ces cloisons étant de même type que la cloison 50 décrite relativement à la figure 7.

La cloison transversale 50t comprend une paroi transversale 51t et un raidisseur transversal 52t soudé sur une face extérieure de la paroi transversale 51t.

De même, la cloison longitudinale 501 comprend une paroi longitudinale 51l et un raidisseur longitudinal 521 soudé sur une face extérieure de la paroi longitudinale 51l.

La paroi transversale 51t s'étend dans un plan perpendiculaire à la direction de déplacement normal du navire. La paroi longitudinale 51l s'étend dans un plan parallèle à la direction de déplacement normal du navire. Leurs faces intérieures 512 respectives forment un angle droit et présentent une arête commune.

Le raidisseur longitudinal 51l et le raidisseur transversal 51t s'étendent dans un même plan, à la fois perpendiculaire à la paroi transversale 51t et à la paroi longitudinale 51l.

Une chaise d'ancrage 54 est soudée dans l'angle formé par les deux faces intérieures 512. Cette chaise sert à fixer une membrane de confinement 61 de la cuve 60 dans un angle de la cellule 40.

Cette chaise présente la forme d'un L et comprend une première branche 54l s'étendant parallèlement à la paroi transversale 51t et une seconde branche 542 s'étendant parallèlement à la paroi longitudinale 51l. Ces branches sont mutuellement solidaires et perpendiculaires.

La chaise présente un coude au point de jonction des deux branches qui pointe vers l'arête commune des parois longitudinale et transversale 50l et 50t.

Les première et seconde branches 541 et 542 sont fixées chacune par deux points d'ancrage 543 soudés sur les faces intérieures respectivement des parois transversale et longitudinale 51t et 51l.

Les points d'ancrage 543 de la première branche 541 sont disposés le long du bord du raidisseur transversal 52t soudé sur la paroi transversale 51t.

De même, les points d'ancrage 543 de la seconde branche 541 sont disposés le long du bord du raidisseur longitudinal 52l soudé sur la paroi longitudinale 51l.

Une fente de relaxation 12 s'étend dans le raidisseur transversal 52t, en regard des points d'ancrage 543 de la première branche 541, et permet de limiter les contraintes sur les soudures de ces points d'ancrage 543.

Comme on le voit sur la figure 4, le point d'ancrage 543 le plus proche de la paroi longitudinale est disposé en regard d'une extrémité 121 de la fente 12, et le point d'ancrage 543 le plus éloigné de la paroi longitudinale est disposé en regard du centre de la fente 12.

Un deuxième exemple est illustré sur la figure 5. Il concerne une cloison du type de la cloison 50 décrite relativement à la figure 7. La pièce soudée sur la face intérieure 512 de la paroi 51 est un gousset 53 supportant une poutre 55. La poutre 55 peut servir à la fixation d'une membrane 61 ou d'un autre élément dont on doit reprendre les efforts.

Le gousset 53 présente la forme générale d'un triangle rectangle comprenant un bord de support 531 et un bord de fixation 532 formant un angle droit. Le bord de support 531 est soudé à la poutre 55 et le bord de fixation 532 à la face intérieure 512 de la paroi 51.

Le bord de fixation 532 s'étend le long du bord du raidisseur 52 soudé sur la paroi 51. Une fente de relaxation 12 est pratiquée dans le raidisseur 52, en regard du bord de fixation 532 du gousset 53.

Le centre de la fente 12 est disposé en regard de l'extrémité du bord de fixation 532 la plus éloignée de la poutre 55.

Un dernier exemple est représenté sur la figure 6, correspondant à un angle entre deux cloisons du type de la cloison 50 décrite relativement à la figure 7. Cette configuration est très proche de celle de la figure 4, les seules différences étant que la chaise d'ancrage 54 est remplacée par un gousset de raidissement 53 et que le raidisseur transversal 52t s'étend parallèlement à la paroi longitudinale 51l, et non plus perpendiculairement à celle-ci comme sur la figure 4.

Le gousset 53 présente un premier bord soudé sur la face intérieure 512 de la paroi transversale 51t et un second bord soudé sur la face intérieure 512 de la paroi longitudinale 51l.

Le premier bord croise le raidisseur transversal 51t. Une fente de relaxation 12 est pratiquée dans ce raidisseur et disposé de telle sorte que le premier bord croise cette fente 12 en son centre.

On comprend donc bien que présente les structures mécano-soudées du type décrit ci-dessus sont particulièrement bien adaptées aux navires de transport de gaz liquide, mais peuvent être également employées dans toutes sortes de constructions métalliques.

Les exemples cités concernent essentiellement des cloisons du navire perpendiculaires au sens de déplacement normal de celui-ci, mais rien n'empêche d'utiliser les structures mécano-soudées de l'invention pour constituer des cloisons orientées dans des sens différents.

Un élément intermédiaire, telle qu'une paroi, peut être interposé entre les premier et deuxième éléments de structure, mais les premiers éléments de structure peuvent également être soudés directement l'un à l'autre.

Les fentes de relaxation de l'invention permettent de diminuer les contraintes dans les différents éléments de la structure et permettent ainsi de réduire les exigences pour le dimensionnement de ces éléments.

Il peut en résulter des gains de matière et des gains économiques.

Les contraintes sur les soudures étant plus faibles, les contrôles réglementaires sur ces soudures peuvent également être allégés.

On notera enfin que les différents éléments constituant les structures de l'invention sont typiquement en acier au carbone, mais que d'autres matériaux peuvent être utilisés sans sortir du cadre de l'invention.

## Revendications

1. Structure mécano-soudée comprenant un premier élément de structure métallique (10) plat et mince s'étendant dans un plan et délimité d'un côté par un bord droit (15), et un second élément de structure métallique (20) soudé sur le bord droit (15) du premier élément de structure (10), ou sur un élément intermédiaire (25) solidaire de ce bord droit (15) et interposé entre les premier et second éléments de structure (10, 20), le second élément de structure (20) exerçant en au moins un point (151) du bord droit (15) un effort se décomposant en au moins une composante s'étendant dans ledit plan perpendiculairement au bord droit (15), **caractérisé en ce que** le premier élément de structure (10) comprend une fente de relaxation (12) s'étendant parallèlement au bord droit (15), et située en regard du point sur lequel s'exerce ledit effort.

2. Structure selon la revendication 1, **caractérisée en ce que** la fente de relaxation (12) est disposée à proximité immédiate du bord droit (15).

3. Structure selon la revendication 2, **caractérisée en ce que** la fente de relaxation (12) présente au repos une largeur inférieure à deux centimètres.

4. Structure selon l'une quelconque des revendications précédentes, **caractérisée en ce que** le premier élément de structure (10) présente une forme allongée dans une direction parallèle au bord droit (15), le premier élément de structure (10) présentant perpendiculairement à ladite direction une première dimension au niveau du point (151) sur lequel s'exerce l'effort, la fente de relaxation (12) présentant selon ladite direction une longueur supérieure à ladite première dimension.

5. Structure selon l'une quelconque des revendications précédentes, **caractérisée en ce que** la fente de relaxation (12) débouche à deux extrémités opposées (12) dans des trous circulaires (13) percés dans le premier élément de structure (10), ces trous présentant un diamètre au moins trois fois supérieur à la largeur de la fente de relaxation (12).

6. Structure selon la revendication 5, **caractérisée en ce que** le premier élément de structure (10) est renforcé autour des trous circulaires (13) par des tôles doublantes (14).

7. Navire de transport de gaz liquéfié comprenant une coque (30), une cellule (40) délimitée par des cloisons (50) solidaires de la coque (30), et une cuve (60) de stockage du gaz liquéfié disposée dans la cellule (40), une au moins des cloisons (50) de la cellule étant une structure mécano-soudée suivant l'une quelconque des revendications 1 à 6, cette cloison comprenant une paroi (51) constituant l'élément intermédiaire (25), au moins un raidisseur (52) soudé sur une face extérieure (511) de la paroi (51) opposée à la cuve de stockage (60) et constituant le premier élément de structure (10), et une pièce soudée sur une face intérieure (512) de la paroi (51) opposée à la face extérieure (511), telle qu'un gousset de raidissement (53) ou un élément d'ancrage (54, 62), cette pièce constituant le second élément de structure (20).

8. Navire selon la revendication 7, **caractérisé en ce que** le second élément de structure (20) est un élément d'ancrage (54, 62), la cuve de stockage (60) comprenant une membrane (61) de confinement du gaz liquéfié fixée à cet élément d'ancrage (54, 62), l'effort exercé sur le raidisseur (52) étant engendré par la sollicitation de la membrane de confinement (61) sur l'élément d'ancrage (54, 62).

9. Navire selon la revendication 8, **caractérisé en ce que** l'élément d'ancrage est un plat d'ancrage (62) s'étendant dans un plan perpendiculaire au raidisseur (52).

10. Navire selon l'une quelconque des revendications 7 à 9, **caractérisé en ce que** la paroi (51) s'étend dans un plan perpendiculaire à la direction normale de déplacement du navire, le raidisseur (52) s'étendant dans un plan perpendiculaire à la paroi (51).
